# EUROPEAN PATENT SPECIFICATION

(11) **EP 1 120 547 B1**
(45) Date of publication and mention of the grant of the patent: **07.12.2005**
(21) Application number: 01101181.4
(22) Date of filing: 24.01.2001
(51) Int. Cl.: F01D 17/16, F02C 6/12

(54) **Variable-capacity turbocharger**
Turbolader mit veränderlicher Kapazität
Turbocompresseur avec capacité variable

(30) Priority: 24.01.2000 JP 2000013598
(43) Date of publication of application: 01.08.2001
(73) Proprietor: MITSUBISHI HEAVY INDUSTRIES, LTD., Tokyo 100-8315 (JP)
(72) Inventor: Jinnai, Yasuaki, Mitsubishi Heavy Industries, Ltd., Kanagawa-ken 229-1193 (JP)
(74) Representative: HOFFMANN EITLE

(56) References cited:
- US-A- 4 726 744
- US-A- 4 737 071
- PATENT ABSTRACTS OF JAPAN vol. 009, no. 272 (M-425), 30 October 1985 (1985-10-30) -& JP 60 116830 A (NISSAN JIDOSHA KK), 24 June 1985 (1985-06-24)
- PATENT ABSTRACTS OF JAPAN vol. 010, no. 051 (M-457), 28 February 1986 (1986-02-28) -& JP 60 201006 A (NISSAN JIDOSHA KK), 11 October 1985 (1985-10-11)

## Description

### BACKGROUND OF THE INVENTION

### Field of the invention

This invention concerns a variable-capacity turbocharger which can control the amount of exhaust gas provided into the turbine compartment by operating the nozzle vanes. More specifically, it concerns an improvement of the nozzle drive mechanism to transmit to the nozzle vanes the displacement of the actuator which operates the nozzle vanes.

### Description of the Related Art

A turbocharger is an effective means to increase the output of an internal combustion engine. A turbine is rotated by the exhaust gas from the engine, and a compressor mounted on the same shaft as the turbine pressurizes the air supplied to the engine. Turbochargers are currently installed in a variety of engines. However, the flow rate of the exhaust gas varies with the speed of the engine's revolution. The flow rate of the exhaust gas which is actually supplied from the engine will not always be that needed to produce the ideal operating conditions for the supercharger. To rectify this situation and allow the turbocharger's capacity to be used to its best advantage, the variable-capacity turbocharger has been developed. In a variable-capacity turbocharger, the flow of the exhaust gas in the turbine compartment is regulated according to the operating state of the internal combustion engine.

This sort of variable turbocharger has a number of nozzle vanes in the nozzle unit of the turbine, which is inside a housing. The nozzle vanes provided on the nozzle shaft are supported in such a way that they can rotate between the open and closed positions. The nozzle shaft is connected through a lever to a link plate which has a doughnut shape. The link plate rotates freely on the rotary axis of the turbine. An actuator on the outside of the housing causes the link plate to rotate by means of a transmission mechanism. When the link plate rotates, the nozzle vanes operate synchronously, continuously moving between the open and closed positions to adjust the degree of opening of the nozzle vanes.

In the nozzle drive mechanism to drive the nozzle vanes according to the prior art, the rotary action of the link plate is not transmitted smoothly into the rotary action of the nozzle vanes. To achieve the desired action of the link plate, the actuator on the outside of the housing of the variable turbocharger had to be large enough to produce an appropriate force.

JP 60 116830 A discloses a turbocharger according to the preamble of claim 1. US-A-4,726,744 and JP 6020 1006 A describe similar turbochargers.

### SUMMARY OF THE INVENTION

The technical problem which this invention addressed is to solve this shortcoming in the prior art. The object of this invention is to provide a turbocharger having a nozzle drive mechanism for the link plate, which can operate all the nozzle vanes smoothly and synchronously.

The variable-capacity turbocharger which controls the opening degree of the nozzle vanes according to this invention has the features of claim 1.

The nozzle vanes are supported in such a way that the nozzle vanes are free to rotate between the open and closed positions on nozzle shafts, and the nozzle vanes connected to levers which correspond to the nozzle shafts so as to rotate along with the levers, each boss at the end of each lever provided with a shaft which are parallel to the nozzle shaft. The shafts in the nozzle vanes engage in oblong holes in the link plate in such a way that they are free to swing, and are thereby connected to the link plate.

Thus when the link plate rotates, there is a component in the generated force which acts on the link plate at the point of contact of the shaft with the hole which pushes the shaft in the radial direction. The shafts of the levers can move smoothly in the radial direction within the holes in the link plate, and the link plate can operate easily.

The turbocharger of this invention has curved oblong hole. The curved centerline which runs the oblong hole to the oblong direction, is curved along an arc tangent to the declined straight line extending at a given angle with respect to the radius of the link plate.

With the invention disclosed above, each of the oblong holes in the link plate which receive the shafts of the levers is curved along an arc tangent to a line extending at a given angle with respect to one of the radii from the rotational center of the link plate. When the link plate rotates, the component of the pushing force on the shaft which acts in the radial direction is greater than in the prior art. This allows the shafts cf the levers to move more smoothly in the radial direction within the holes in the link plate.

The variable capacity turbocharger has a transmission mechanism to transmit the action of the actuator to the link plate. The transmission mechanism includes a link member, a swinging member connected to the link member as well as a linking part which is between the swinging member and the link plate and which serves to connect the transmission mechanism to the link plate. In this way, the linear movement of the actuator is converted by means of the link member into a swinging motion of the swinging member, then further converted into rotation of the linking plate by the linking part which moves in an arc round the axis of the shaft of the swinging member.

### BRIEF DESCRIPTION OF THE DRAWINGS

Figure 1 is a lateral view of the exterior of a variable-capacity turbocharger.
Figure 2 is a cross section of a turbine compartment.
Figure 3 is a partially cut away frontal view of the variable-capacity turbocharger in Figure 1.
Figure 4 is an enlargement of a portion of Figure 3. It shows the transmission mechanism which transmits the action of the actuator to the link plate and the elements which link the two.
Figure 5 is a plan view of the link plate shown in Figure 4.
Figure 6 is an enlarged view of the oblong hole on the link plate according to a preferred embodiment (not part of this invention).
Figure 7 is a partial plain view of the link plate according to a preferred embodiment of this invention.
Figure 8 is an exploded view of the transmission mechanism to transmit to the link plate.

In these drawings, 10 is a turbine casing, 50 is an actuator, 52 is rod, 54 is a link member, 104 is a nozzle vane, 112 is a link plate, 112d is an oblong hole on the link plate, 112d" is an oblong hole according to the preferred embodiment, 114 is a lever, 120 is a swinging member, 130 is a bridge, 140 is a roller.

### DETAILED DESCRIPTION OF THE PREFERRED EMBODIMENTS

In this section we shall explain several embodiments with reference to the appended drawings.

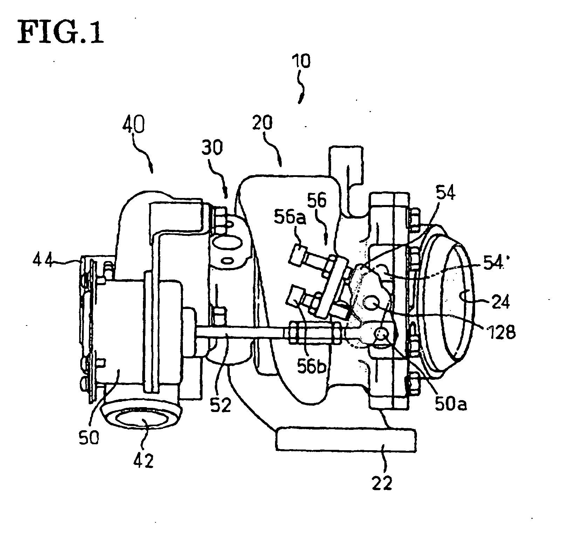

Figure 1 illustrates the external appearance of a variable-capacity turbocharger 10. Variable-capacity turbocharger 10 includes a housing, which comprises turbine housing 20, compressor housing 40 and main housing 30, which is between turbine housing 20 and compressor housing 40. Turbine housing 20 has an intake port 22 and an exhaust port 24. Compressor housing 40 has an intake port 44 and a discharge port 42.

On the outside of the housings 20, 30 and 40 is actuator 50, which drives the nozzle vanes (to be explained shortly). Actuator 50 uses air pressure, or more specifically it uses the negative pressure of the air sucked into the internal combustion engine (not pictured) on which the variable-capacity turbocharger 10 is installed, to cause rod 52 to move forward and back. It is, however, possible in this invention to replace the actuator by any type of actuator which functions the same, such as an active pressure actuator, or a magnetic actuator.

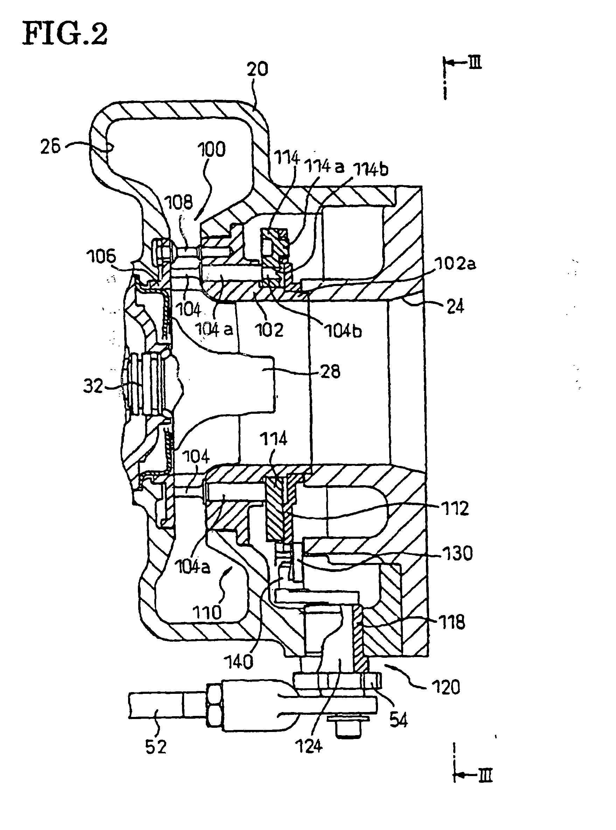

The turbine compartment, especially main housing, is shown in Figure 2. As can be seen in Figure 2, turbine shaft 32 is supported in main housing 30 in such a way that it is free to rotate. Turbine 28, which is mounted to one end of turbine shaft 32, is inside turbine housing 20. The exhaust gas from the internal combustion engine is conducted from intake port 22 into turbine housing 20. It is supplied to turbine 28 through scroll channel 26, which is created on the inside of turbine housing 20, and nozzle unit 100, which is the inlet to turbine 28. After it drives the turbine 28, the exhaust gas which was supplied is exhausted through exhaust port 24.

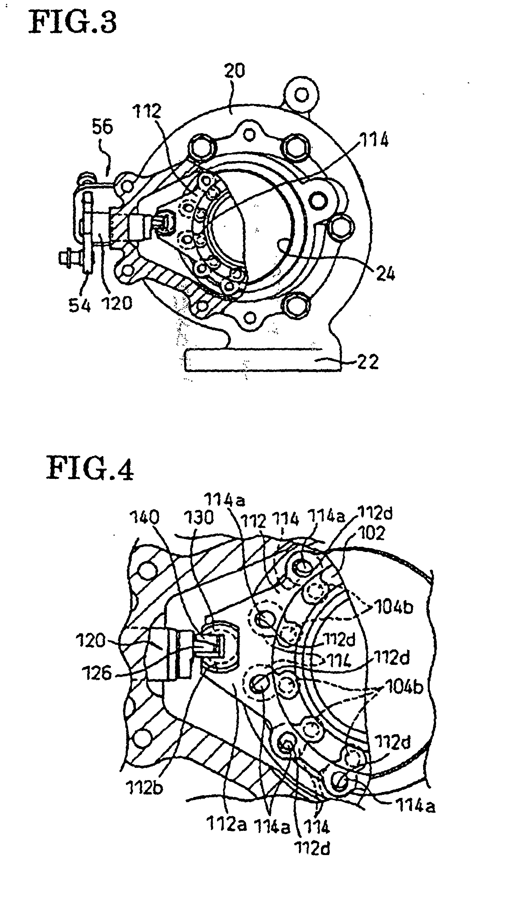

Nozzle unit 100 comprises mounting plate 102, which is fixed to turbine housing 20, and side plate 106, which faces mounting plate 102 and is mounted in the axial direction. A number of nozzle vanes 104 are placed between the two plates at regular intervals along the circumference of the shaft. At the base of nozzle vanes 104 is shaft portion 104a, which is mounted to mounting plate 102 so that portion 104a is free to rotate the vanes between the open and closed positions. The end 104b of each shaft portion 104a of nozzle vane assembly 104 goes through mounting plate 102 in the axial direction. The shafts are connected to the various levers 114 which correspond to the nozzle vanes. (See Figures 3 and 4). The nozzle vane 104 rotates via nozzle shaft 104a according to the rotation of lever 114. Each lever 114 has a hole 114b to receive the end 104b of one of the shaft portions 104a, and a boss, shaft portion 114a, on the side opposite the hole 114b.

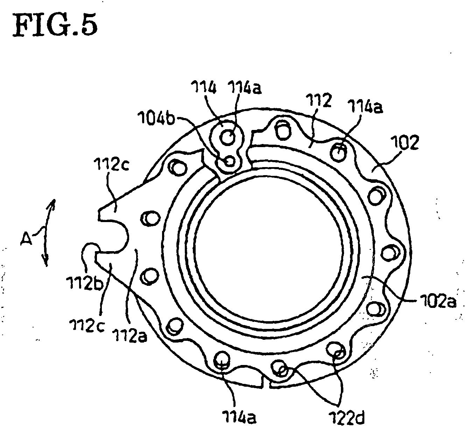

The shaft 114a of lever 114 can slide within the oblong hole 112d provided at regular intervals along the circumference of link plate 112. There is a cylindrical boss 102a on the side of mounting plate 102 opposite nozzle unit 100. An annular link plate 112 (See Figure 5) is mounted to the boss 102a so that it is free to rotate on the rotational axis of turbine 28. Link plate 112 has a series of oblong holes 112d at regular intervals along its circumference to receive the shaft portions 114a of levers 114. Further, link plate 112 has on the same surface a trapezoidal elongated portion 112a on one side. The end of the elongated portion 112a is divided into two portions to form locking arms 112c. The two arms 112c form a rectangular recession 112b.

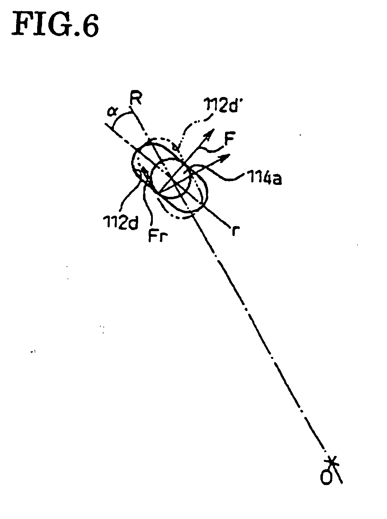

As is shown in Figures 5 and 6 by the broken line with two dots, in the prior art, oblong hole 112d' of link plate 112 is formed on a radius of the rotational center of link plate 112, i.e., it is formed on a radius of a circle whose center is the rotational center O (turbine shaft) of turbine 28 in the variable turbocharger 10. As we have explained, with this sort of prior art design, actuator 50 must be able to produce a great deal of force because link plate 12 does not operate easily. To address this problem, in this embodiment the center line r which runs lengthwise through oblong hole 112d of link plate 112 is inclined at an angle α with respect to a line R which runs the center of the oblong hole 112d and the center O of turbine 28. This design enables link plate 112 to rotate smoothly and reduces the load imposed on actuator 50.

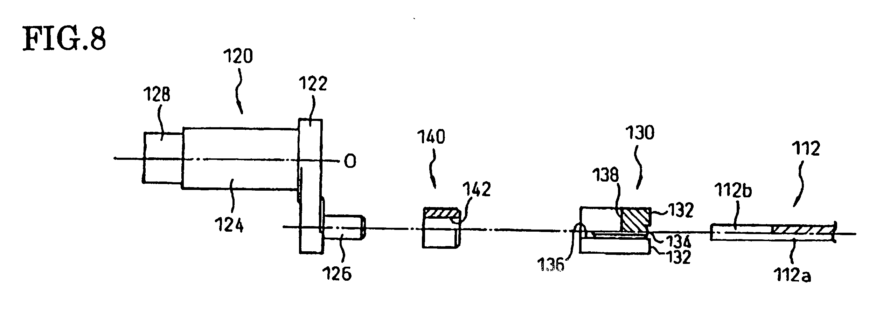

The variable-capacity turbocharger 10 of this embodiment also has a transmission mechanism to transmit the action of the actuator 50 to link plate 112. The transmission mechanism includes rod 52 of actuator 50; link member 54 (see Figure 1), which is connected to the end of rod 52 by pin 50a; swinging member 120 (see Figures 2 and 8), which is connected to the link member 54; and roller 140 and bridge 130, which are between member 120 and link plate 112, and which serve to connect the transmission mechanism to link plate 112.

As can be seen in Figure 8, swinging member 120 comprises arm 122; shaft 124, which extends along a given axis O from one end of arm 122, and is supported by turbine housing 20 through sleeve 118 in such a way that it can freely rotate; connector 128, which is on the end of shaft 124 and coaxial with it, and connected to link member 54 in such a way that it cannot move relative to the link member; and pin 126, which extends from the side of arm 122 opposite shaft 124 and is parallel to that shaft. Swinging member 120 may be made of a metallic material, for example, stainless steel. Ideally, it should be formed of a single piece of austenitic stainless steel. Swinging member 120, arm 122, shaft 124, connector 128 and pin 126 may be formed separately and welded together.

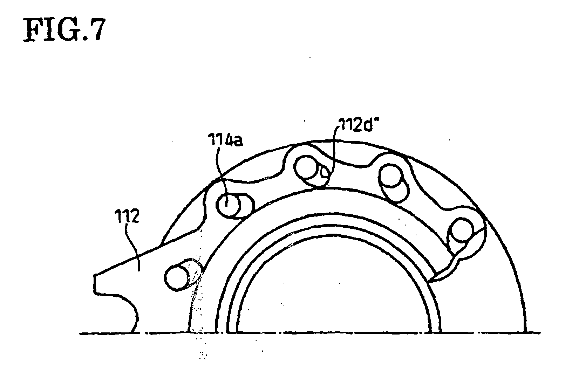

As shown in Figure 7, bridge 130 comprises two flat plates 132, which are positioned parallel to each other with a slight gap between them, and center unit 134, which connects the two plates 132. At the center unit 134 provided between the two plates 132 is a groove 136 in which the locking arms 112c of link plate 112 engage. Part of bridge 130, including center unit 134, is removed to the middle of the bridge to form cut-away portion 138. The two opposed surfaces are parallel and slide against each other. As can be seen in Figure 8, when the transmission mechanism is assembled, the locking unit is formed when cut-away portion 138 goes into roller 140, which is mounted on pin 126 of swinging member 120. Bridge 130 may be made of a metallic material, for example, austenitic stainless steel.

As shown in Figure 8, roller 140 is roughly cylindrical, with the diameter of it's opening slightly larger than the exterior diameter of pin 126. The exterior diameter of the roller is slightly smaller than the gap between the sliding surfaces 138 of bridge 130. Roller 140 may be made of a metallic material, for example, martensite stainless steel.

In this section we shall explain how this embodiment operates.

When the internal combustion engine operates, a negative intake pressure is created according to its rate of revolution and the openness of its throttle, and then the pressure is controlled by a magnetic valve to transmit it to the actuator 50. The actuator 50 operates according to this pressure. Rod 52 moves forward and back in the axial direction (to the right and left in Figure 1) according to the magnitude of the negative intake pressure. When rod 52 operates, link member 54 rotates on shaft 124 of swinging member 120 in response. As can be seen in Figure 1, link member 54, which is shown by solid lines, is in contact with bolt 56a on the top of stop 56. At this point nozzle vanes 104 are in the open position, the position which produces the maximum nozzle opening. When the engine is operating at low r.p.m., or the throttle is only slightly open, actuator 50 draws back rod 52. As rod 52 draws as far back as it can go, link member 54 moves into a position in which it is in contact with bolt 56b on the lower portion of stop 56, as shown by the dotted lines. At this point nozzle vanes 104 are in the position which produces the smallest nozzle opening.

In this way the linear movement of rod 52 is converted by link member 54 into the swinging motion of swinging member 120. Pin 126 of member 120 moves in an arc around axis O of shaft 122 as shown in Figures 4 and 5. At this point pin 126 and roller 140 are in cut-away portion 138 in bridge 130, and the pin is between roller 140 and surface 138a. It slides upward and downward against bridge 130 in the relationship shown in Figure 9, i.e., it slides along the axis of rotation of turbine 28. At the same time link plate 112 rotates around the circumference of boss 102a on mounting plate 102, with the rotary axis of turbine 28 as its center. When link plate 112 rotates, lever 114, which is connected to link plate 112, rotates along with nozzle vanes 104 with shaft 104a of vanes 104 as its center.

The action of shafts 114a of lever 114 in holes 112d of link plates 112 can be analyzed into action in the circumferential direction around the rotational center O (Figure 6) of lever 114 and action in the radial direction. With this first embodiment, each of the holes 112d which receive shafts 114a of lever 114 is formed along a centerline r of the oblong hole 112d which describes a given angle α with respect to a radius R from the rotational center O of link plate 112. When link plates 112 rotate, a component Fr, which pushes each shaft 114a along the center line r of hole 112d, is generated in the force F acting on lever 114 from link plate 112 at the point where shaft 114a is in contact with hole 112d. This component Fr allows shafts 114a of lever 114 to move smoothly in the direction of declined center line of the oblong holes 112d of link plates 112. As a result, the load on actuator 50 is reduced. In the prior art design, each hole 112d' was formed directly on a radius, so either there was no force generated to move shafts 114a in the direction of declined center line r within holes 112d' or only a very small force. This design in the prior arts prevented link plates 112 from operating smoothly.

In Figures 5 and 6, holes 112d of link plates 112 are oblong, and the ends of the oblong holes are rounded However, holes 112d could also have a simple rectangular shape. Further, according to the invention, the holes in link plates 112, as indicated by reference number 112d" in Figure 7, are curved to correspond to the course traced by shafts 114a of lever 114 when it rotates around shaft 104a of nozzle vanes 104.

This design is applicable to a variable turbo-charger having the following features. The nozzle vanes are connected to the link plates by means of shafts which are parallel to the shaft of the nozzle vanes on the circumference of the link plates. These shafts engage in oblong holes in the lever. Each of the holes in the lever is curved along an arc tangent to a line extending at a given angle with respect to a radius from the rotational center of the link plate.

The oblong hole is provided on the circumference of link plate 112, and it faces perpendicular to the nozzle shaft of nozzle vane. The shaft 114a of lever 114 engages with the oblong hole 112d and slides within the inner surface of the oblong hole. As mentioned above, therefore, the shaft 114a can slide within the oblong hole which is curved along an arc tangent to a line extending at a given angle with respect to a radius from the rotational center of the link plate.

With this embodiment of the invention, each of holes 112d" of link plates 112 is curved along an arc tangent to a radius r extending at a given angle α with respect to a radius R from the rotational center O of link plate 112. When the link plate rotates, the component of the force which pushes shaft 114a in the direction of radius R is greater than in the first embodiment. More specifically, when the shape of each hole 112d" in link plate 112 corresponds to the course traced by shaft 114a of lever 114, shafts 114a of lever 114 can move even more smoothly in the radial direction R within holes 112d" in link plate 112.

We disclosed only one preferred embodiment of the invention, however, the scope of the invention is not limited thereto, and the invention will cover any modification which can be made by a person with ordinary skill in the art.

## Claims

1. A variable-capacity turbocharger (10) which controls the opening degree of nozzle vanes (104), comprising:
a turbine (28) provided in a housing (20), which is free to rotate on a turbine shaft (32);
a plurality of nozzle vanes (104) arranged in a nozzle unit around said turbine (28) in said housing (20), each nozzle vane (104) having a shaft portion (104a) supported in such a way that the nozzle vane (104) is free to rotate thereon between an open and a closed position, the end (104b) of the shaft portion (104a) of said nozzle vane (104) being connected to a lever (114) which corresponds to said nozzle vane (104), a boss (114a) at the end of each lever (114) protruding parallel to said nozzle shaft in the direction opposite to the nozzle vane (104) at a position radially outward from said end (104b);
a link plate (112) which rotates freely around said turbine provided in said housing (20), the link plate (112) having oblong holes (112d") in which the bosses (114a) of said levers (114) are received to thereby connect the nozzles to said link plate (112) so that the nozzles can be continuously rotated around the axis of said shaft portion (104a) synchronously by rotation of said link plate (112); and
an actuator (50) outside said housing (20), which actuator (50) is connected to said link plate (112) through a transmission mechanism;
and a centerline of each oblong hole (112") curved along an arc tangent to a declined straight line (r) extending at a given angle (α) with respect to a radial line (R) connecting the center of the oblong hole and a turbine rotation center (O),
**characterized in that** the transmission mechanism includes a link member (54), a swinging member (120), and a linking part (126,130,140) provided between said swinging member (120) and link plate (112) to link the swinging member and the link plate, said linking part (126,130,140) being constructed to move in an arc around the shaft of said swinging member (120);

2. A variable-capacity turbocharger according to claim 1,
further **characterized in that** the linking part provided between said swinging member (120) and link plate (112) includes roller (140) and bridge (180).

## Patentansprüche

1. Turbolader (10) mit variabler Kapazität, welcher den Grad der Öffnung von Düsenschaufeln (104) steuert, mit:
einer in einem Gehäuse (20) vorgesehenen Turbine (28), die sich an einer Turbinenwelle (32) frei drehen kann;
mehreren Düsenschaufeln (104), die in einer Düseneinheit um die Turbine (28) herum in dem Gehäuse (20) angeordnet sind wobei jede Düsenschaufel (104) einen Wellenbereich (104a) hat, der so gelagert ist, dass die Düsenschaufel (104) sich daran frei zwischen einer geöffneten und einer geschlossenen Position drehen kann, wobei das Ende (104b) des Wellenbereichs (104a) der besagten Düsenschaufel (104) mit einem Hebel (114) verbunden ist, der der Düsenschaufel (104) entspricht, und wobei ein Ansatz (114a) am Ende jedes Hebels (114) parallel zu der Düsenwelle in der Richtung entgegen der Düsenschaufel (104) an einer Stelle radial außerhalb dieses Endes (104b) hervorsteht;
einer Gelenkplatte (112), die sich frei um die Turbine herum dreht, welche in dem Gehäuse (20) vorgesehen ist, wobei die Gelenkplatte (112) längliche Öffnungen (112d") hat, in welchen die Ansätze (114a) der Hebel (114) aufgenommen sind, um **dadurch** die Düsen mit der besagten Gelenkplatte (112) zu verbinden, so dass die Düsen durch die Drehung der Gelenkplatte (112) kontinuierlich synchron um die Achse des Wellenbereichs (104a) herum gedreht werden können; und
einem Stellglied (50) außerhalb des Gehäuses (20), welches Stellglied (50) mit der Gelenkplatte (112) durch einen Getriebemechanismus verbunden ist;
und einer Mittellinie jeder länglichen Öffnung (112"), die entlang einer Bogentangente an eine geneigte gerade Linie (r), die sich in einem gegebenen Winkel (α) mit Bezug auf eine radiale Linie (R) erstreckt, welche die Mitte der länglichen Öffnung und einen Drehmittelpunkt (O) der Turbine verbindet, gekrümmt ist,
**dadurch gekennzeichnet, dass**
der Getriebemechanismus ein Gelenkelement (54), ein Schwingelement (120) und einen Gelenkteil (126, 130, 140) beinhaltet, der zwischen dem Schwingelement (120) und der Gelenkplatte (112) vorgesehen ist, um das Schwingelement und die Gelenkplatte zu verbinden, wobei der Gelenkteil (126, 130, 140) so aufgebaut ist, dass er sich in einem Bogen um die Welle des Schwingelements (120) herum bewegt.

2. Turbolader mit variabler Kapazität nach Anspruch 1, weiter **dadurch gekennzeichnet, dass** der Gelenkteil zwischen dem Schwingelement (120) und der Gelenkplatte (112) eine Rolle (140) und eine Brücke (130) beinhaltet.

## Revendications

1. Turbocompresseur à capacité variable (10) qui commande le degré d'ouverture de pales de tuyère (104), comprenant :
une turbine (28) disposée dans un logement (20), qui est libre de tourner sur un arbre de turbine (32) ;
une pluralité de pales de turbine (104) disposées dans une unité de tuyère autour de ladite turbine (28) dans ledit logement (20), chaque pale de tuyère (104) ayant une portion d'arbre (104a) supportée de telle sorte que la pale de tuyère (104) est libre de tourner sur celle-ci entre une position ouverte et une position fermée, l'extrémité (104b) de la portion d'arbre (104a) de ladite pale de tuyère (104) étant raccordée à un levier (114) qui correspond à ladite pale de tuyère (104), un bossage (114a) sur l'extrémité de chaque levier (114) faisant saillie parallèlement audit arbre de tuyère dans la direction opposée à la pale de tuyère (104) en une position radialement à l'extérieur de ladite extrémité (104b);
une plaque d'articulation (112) qui tourne librement autour de ladite turbine disposée dans ledit logement (20), la plaque d'articulation (112) ayant des trous oblongs (112d") dans lesquels sont reçus les bossages (114a) desdits leviers (114) pour raccorder ainsi les tuyères à ladite plaque d'articulation (112) de sorte que les tuyères peuvent être mises en rotation de manière continue autour de l'axe de ladite portion d'arbre (104a) de façon synchrone par rotation de ladite plaque d'articulation (112) ; et
un organe d'actionnement (50) à l'extérieur dudit logement (20), lequel organe d'actionnement (50) est raccordé à ladite plaque d'articulation (112) par un mécanisme de transmission ;
et un axe central de chaque trou oblong (112d") incurvé le long d'un arc tangentiel à une ligne droite inclinée ( r) s'étendant selon un angle donné. (α) par rapport à une ligne radiale (R) reliant le centre du trou oblong et un centre de rotation de turbine (O),
**caractérisé en ce que** le mécanisme de transmission comprend un élément de liaison (54), un élément oscillant (120) et une partie d'articulation (126, 130, 140) disposée entre l'élément oscillant (120) et la plaque d'articulation (112) pour relier l'élément oscillant et la plaque d'articulation (112), ladite partie d'articulation (126,130,140) étant conçue pour se déplacer selon un arc autour de l'arbre dudit élément oscillant (120).

2. Turbocompresseur à capacité variable selon la revendication 1,
**caractérisé de plus en ce que** la partie d'articulation disposée entre ledit élément oscillant (120) et la plaque d'articulation (112) comprend un rouleau (140) et un pontet (130).
